# EUROPÄISCHE PATENTSCHRIFT

(11) **EP 2 945 491 B1**
(45) Veröffentlichungstag und Bekanntmachung des Hinweises auf die Patenterteilung: **21.09.2016**
(21) Anmeldenummer: 14700498.0
(22) Anmeldetag: 15.01.2014
(51) Int. Cl.: A23L 5/10, A23L 5/30

(54) **MIKROWELLENGEEIGNETE LEBENSMITTELMASSE**
FOOD MASS SUITABLE FOR MICROWAVING
PREPARATION ALIMENTAIRE ADAPTÉE AUX MICRO-ONDES

(30) Priorität: 21.01.2013 DE 102013100584
(43) Veröffentlichungstag der Anmeldung: 25.11.2015
(73) Patentinhaber: Chemische Fabrik Budenheim KG, 55257 Budenheim (DE)
(72) Erfinder: KRONING, Christian, 61381 Friedrichsdorf (DE); LEMKE, André, 65203 Wiesbaden (DE)
(74) Vertreter: WSL Patentanwälte Partnerschaft mbB
(86) Internationale Anmeldenummer: PCT/EP2014/050662
(87) Internationale Veröffentlichungsnummer: WO 2014/111402

(56) Entgegenhaltungen:
- EP-A1- 0 155 760
- EP-A2- 0 202 019
- EP-A2- 1 958 520
- EP-A2- 2 520 171
- WO-A1-92/01384
- WO-A1-94/00024
- WO-A1-2007/130070
- WO-A1-2009/068378
- GB-A- 1 507 867
- US-A- 3 418 137
- US-A- 5 219 602
- US-A- 6 033 697
- US-A1- 2002 025 360

## Beschreibung

### Gegenstand der Erfindung

Die Erfindung betrifft spezielle Mikrowellenabsorber, die, wenn sie einer Lebensmittelmasse zugesetzt sind, ein verbessertes Erhitzen, Garen und/oder Backen der Lebensmittelmasse im Mikrowellenfeld erlauben.

### Hintergrund der Erfindung

Im Nahrungsmittelbereich werden zunehmend Produkte nachgefragt und angeboten, die der Konsument lediglich durch Erhitzen im Backofen oder im Mikrowellenherd selbst in einen verzehrfertigen Zustand bringen kann. Dabei sind die Produkte entweder bereits im Wesentlichen vollständig fertig gegart und werden nur noch für den Verzehr erhitzt oder die Produkte sind noch roh oder nur vorgegart oder vorgebacken und werden vom Konsumenten noch fertig gegart oder gebacken.

Das Backen in herkömmlichen Backöfen basiert auf einer Kombination von Konvektions- und Strahlungswärme. Die Lebensmittel werden von der Oberfläche nach innen erwärmt, so dass die Außenseite des Lebensmittels mehr Hitze erhält als das Innere des Lebensmittels, wodurch eine knusprige Außenseite erreicht werden kann.

Das Erhitzen im Mikrowellenherd bietet gegenüber dem Erhitzen im Backofen ein besonders bequemes, einfaches, schnelles und energieeffizientes Verfahren, Produkte aufzutauen, zu erhitzen, zu garen und/oder zu backen. Dabei bewirkt die Mikrowellenstrahlung in dem Produkt Dipol-und Molekülschwingungen in den Wassermolekülen, aber auch in anderen polaren Molekülen, wodurch Wärme entsteht. Die Erwärmung beruht dabei nicht auf der Absorption der Mikrowellenstrahlung bei einer bestimmten Resonanzfrequenz. Vielmehr versuchen die Wassermoleküle sich laufend nach dem elektromagnetischen Wechselfeld der Mikrowellenstrahlung auszurichten, wobei die Wärme als dielektrischer Verlust im gesamten Lebensmittel entsteht. Anders als beim Erwärmen im herkömmlichen Backofen, wo die Wärmeleitung von der Oberfläche des Produkts nach innen erfolgt, findet bei der Bestrahlung mit Mikrowellen die Erwärmung im Wesentlichen im gesamten Lebensmittel gleichzeitig statt, wobei das Ausmaß bzw. die Geschwindigkeit der Erwärmung in der Mitte des Lebensmittels im Vergleich zu der Erwärmung an der Oberfläche des Lebensmittels je nach Eindringtiefe der Mikrowellenstrahlung sehr unterschiedlich oder sehr ähnlich sein kann. Die Eindringtiefe der Mikrowellenstrahlung wird unter anderem vom Wassergehalt und der Temperatur des Lebensmittels beeinflusst. Die Intensität von Mikrowellenstrahlung nimmt beispielsweise in Wasser mit zunehmender Eindringtiefe exponentiell ab. Jedenfalls findet aufgrund der unter den meisten Bedingungen guten Durchdringung des Lebensmittels von den Mikrowellenstrahlen im Wesentlichen keine Krustenbildung oder Oberflächenbräunung des Lebensmittels statt. Insbesondere bei gefrorenen Lebensmitteln erfolgt die Mikrowellenerwärmung im Inneren der Lebensmittel mehr oder weniger stark verzögert, was auf den üblicherweise hohen Wasser- bzw. Eisgehalt zurückzuführen ist.

Die Methode der Mikrowellenerhitzung ist daher nicht für alle Arten von Lebensmitteln geeignet, insbesondere wenn eine starke Oberflächenerhitzung erwünscht ist. Beispielsweise werden Teigwaren wie Brot, Brötchen oder Pizza beim Erhitzen im Mikrowellenherd in der Regel eher weich und feucht und es findet keine Krustenbildung und Bräunung der Außenseite des Produktes statt, da die Mikrowellenstrahlung das gesamte Produkt gleichzeitig erwärmt und die notwendige Außenwärme, die bei der im Backofen erzeugten Strahlungswärme oder Konvektionswärme die Struktur der Oberschicht verändert, nicht erzeugt wird. Im Mikrowellenherd erhalten die Produkte in der Regel nicht ihr gewünschtes produkttypisches Aussehen und die organoleptischen Eigenschaften wie Geruch und Geschmack, wie sie beim Erhitzen im Backofen erzielt werden.

Um dieses Problem zu lösen, sind spezielle Produktverpackungen bekannt, bei denen das Verpackungsmaterial selbst oder eine darauf aufgebrachte Beschichtung durch die Mikrowellenstrahlung aufgeheizt wird und das darin enthaltene Produkt durch abgegebene Strahlungswärme oder Konvektionswärme erhitzt wird. Diese Art der Erwärmung des Produkts kommt der Erwärmung in einem Backofen näher als die Erwärmung durch direkte Wechselwirkung des Produkts mit der Mikrowellenstrahlung, so dass in solchen Verpackungen auch Lebensmittel gebacken werden können und eine Kruste und sogar eine Oberflächenbräunung erhalten wird. Die Herstellung von speziellen Mikrowellenverpackungen ist jedoch aufwendig, und die bekannten Mikrowellenverpackungen eignen sich auch nicht für jede Form der Lagerung von Lebensmitteln, beispielsweise die gekühlte oder tiefgekühlte Lagerung von Teigen.

Die US-A-4 283 424 beschreibt eine Gefrierpizza, die speziell für das Fertigbacken oder Wiedererhitzen im Mikrowellenherd geeignet sein soll, wobei eine Krustenbildung dadurch erreicht wird, dass die Kruste der Pizza zwei unterschiedliche, übereinander angeordnete Krustenlagen umfasst. Die erste Krustenlage besteht aus einem gebackenen kräcker-typischen Teigmaterial mit einer Restfeuchte von 5 % oder weniger, und die unmittelbar darüber angeordnete zweite Krustenlage besteht aus einem gebackenen brotteigähnlichen Krustentyp mit einer Restfeuchte von 20 bis 40%. Die Kräckerkruste ist so angepasst, dass sie überschüssige Feuchte, die beim Mikrowellenerwärmen erzeugt wird, absorbiert und der Pizzateig eine Kruste bildet.

Die US-A-5 194 271 beschreibt eine Teigzusammensetzung auf der Grundlage eines Mehls mit hohem Amylosegehalt, welche als Umhüllung für einen darunter angeordneten Teig dient und beim Erhitzen im Mikrowellenherd eine knusprige, gebräunte Kruste bilden soll.

Die WO94/00024 beschreibt eine flüssige Teigmasse, enthaltend 1,095 Gewichtsprozent Calciumgluconat, wobei das mit der Teigmasse überzogene Lebensmittel in der Mikrowelle zubereitet werden kann.

Die EP0155760 beschreibt eine trockene Teigmasse mit 2,4 Gewichtsprozent Pyran (Monocalciumphosphat-Anhydrat), die mit 975 g Wasser zu einem fertigen Teig gemischt (enthaltend ca. 1,04 g Pyran) wird, mit dem ein Fischfilet paniert, tiefgefroren und in der Mikrowelle wieder aufgetaut wird.

Es besteht daher ein Bedarf nach Lebensmitteln, insbesondere teigbasierten Produkten, die sich jederzeit im Mikrowellenherd erhitzen lassen und dabei ein Ergebnis ähnlich wie beim Erhitzen, Garen oder Backen im herkömmlichen Backofen erzielt wird.

### Aufgabe

Die Aufgabe der vorliegenden Erfindung bestand daher darin, das Auftauen, Erhitzen, Garen und/oder Backen einer Lebensmittelmasse, insbesondere eines teigbasierten Produkts, einer Teigware, eines Gefrierteigs, einer Panade, eines Fleischteigs oder eines Gemüseteigs, im Mikrowellenfeld zu verbessern.

### Beschreibung der Erfindung

Gelöst wird diese Aufgabe durch ein Verfahren zum Auftauen, Erhitzen, Garen und/oder Backen einer Lebensmittelmasse, insbesondere eines teigbasierten Produkts, einer Teigware, eines Gefrierteigs, einer Panade, eines Fleischteigs oder eines Gemüseteigs, im Mikrowellenfeld, dadurch gekennzeichnet, dass die Lebensmittelmasse einen zugesetzten Mikrowellenabsorber in einer Menge von 0,5 bis 5,0 Gew.-%, bezogen auf das Gesamtgewicht der Lebensmittelmasse, enthält, wobei der Mikrowellenabsorber unter Orthophosphaten (PO₄)³⁻, Hydrogenphosphaten (HPO₄)²⁻, Dihydrogenphosphaten (H₂PO₄)⁻, Diphosphaten (P₂O₇)⁴⁻ (Pyrophosphaten), Metaphosphaten [(PO₃)₂²⁻]ₙ, Tripolyphosphaten (P₃O₁₀)⁵⁻ oder höher kondensierten Phosphaten mit einer mittleren Kettenlänge von 3 bis 50, Carbonaten, Hydroxiden, Citraten und Gluconaten der Metalle Calcium (Ca), Magnesium (Mg), Eisen (Fe), Zink (Zn) und Kupfer (Cu) ausgewählt ist, mit der Maßgabe, dass die Wasserlöslichkeit des Mikrowellenabsorbers bei 20°C kleiner oder gleich 50 g/L Wasser ist und der Mikrowellenabsorber ein Porenvolumen von mehr als 3,0 x 10⁻³ cm³/g und weniger als 200 x 10⁻³ cm³/g aufweist.

Die Erfindung betrifft auch die Verwendung von Orthophosphaten (PO₄)³⁻, Hydrogenphosphaten (HPO₄)²⁻, Dihydrogenphosphaten (H₂PO₄)⁻, Diphosphaten (P₂O₇)⁴⁻ (Pyrophosphaten), Metaphosphaten [(PO₃)₂²⁻]ₙ, Tripolyphosphaten (P₃O₁₀)⁵⁻ oder höher kondensierten Phosphaten mit einer mittleren Kettenlänge von 3 bis 50, Carbonaten, Hydroxiden, Citraten und Gluconaten der Metalle Calcium (Ca), Magnesium (Mg), Eisen (Fe), Zink (Zn) und Kupfer (Cu) als Mikrowellenabsorber für die Herstellung einer Lebensmittelmasse, insbesondere eines teigbasierten Produkts, einer Teigware, eines Gefrierteigs, einer Panade, eines Fleischteigs oder eines Gemüseteigs, mit der Maßgabe, dass die Wasserlöslichkeit des Mikrowellenabsorbers bei 20°C kleiner oder gleich 50 g/L Wasser ist und der Mikrowellenabsorber ein Porenvolumen von mehr als 3,0 x 10⁻³ cm³/g und weniger als 200 x 10⁻³ cm³/g aufweist.

Die Erfindung betrifft auch eine Lebensmittelmasse, insbesondere teigbasiertes Produkt, Teigware, Gefrierteig, Panade, Fleischteig oder Gemüseteig, welche zusätzlich zu den für die Lebensmittelmasse üblichen Bestandteilen einen zugesetzten Mikrowellenabsorber in einer Menge von 0,5 bis 5,0 Gew.-%, bezogen auf das Gesamtgewicht der Lebensmittelmasse, enthält, wobei der Mikrowellenabsorber unter Orthophosphaten (PO₄)³⁻, Hydrogenphosphaten (HPO₄)²⁻, Dihydrogenphosphaten (H₂PO₄)⁻, Diphosphaten (P₂O₇)⁴⁻ (Pyrophosphaten), Metaphosphaten [(PO₃)₂²⁻]ₙ, Tripolyphosphaten (P₃O₁₀)⁵⁻ oder höher kondensierten Phosphaten mit einer mittleren Kettenlänge von 3 bis 50, Carbonaten, Hydroxiden, Citraten und Gluconaten der Metalle Calcium (Ca), Magnesium (Mg), Eisen (Fe), Zink (Zn) und Kupfer (Cu) ausgewählt ist, mit der Maßgabe, dass die Wasserlöslichkeit des Mikrowellenabsorbers bei 20°C kleiner oder gleich 50 g/L Wasser ist und der Mikrowellenabsorber ein Porenvolumen von mehr als 3,0 x 10⁻³cm³/g und weniger als 200 x 10⁻³ cm³/g aufweist.

Wenn hierin von einer Menge des Mikrowellenabsorbers bezogen auf das Gesamtgewicht der Lebensmittelmasse die Rede ist, ist damit der Anteil der Lebensmittelmasse gemeint, welche den Mikrowellenabsorber zugesetzt enthält. Wenn beispielsweise nur der Teiganteil einer gefüllten Teigtasche den Mikrowellenabsorber enthält, so bezieht sich die Mengenangabe des Mikrowellenabsorbers nur auf den Teiganteil ohne die den Mikrowellenabsorber nicht enthaltende Füllung. Im Falle einer den Mikrowellenabsorber enthaltenden Panade bezieht sich die Mengenangabe des Mikrowellenabsorbers nur auf das Gewicht der Panade ohne das den Mikrowellenabsorber nicht enthaltende panierte Lebensmittel. Ist die Menge des Mikrowellenabsorbers zu gering, beispielsweise unter 0,5 Gew.-%, wird keine ausreichende Bräunung und Krustenbildung auf der Produktoberfläche erreicht. Ist die Menge des Mikrowellenabsorbers zu hoch, beispielsweise über 5 Gew.-%, so kann dies geschmackliche Nachteile haben.

In einer bevorzugten Ausführungsform der Erfindung enthält die Lebensmittelmasse den zugesetzten Mikrowellenabsorber in einer Menge von 1,0 bis 4,0 Gew.-%, vorzugsweise von 1,5 bis 3,0 Gew.-%, bezogen auf das Gesamtgewicht der Lebensmittelmasse.

In einer weiteren bevorzugten Ausführungsform der Erfindung ist die Wasserlöslichkeit des Mikrowellenabsorbers bei 20°C kleiner oder gleich 20 g/L Wasser, vorzugsweise kleiner oder gleich 5 g/L Wasser.

In einer weiteren bevorzugten Ausführungsform der Erfindung weist der Mikrowellenabsorber ein Porenvolumen von weniger als 150 x 10⁻³ cm³/g, vorzugsweise von weniger als 125 x 10⁻³ cm³/g auf.

In einer weiteren bevorzugten Ausführungsform der Erfindung ist der Mikrowellenabsorber ausgewählt unter Monocalciumphosphat-Anhydrat (Ca(H₂PO₄)₂), Monocalciumphosphat-Monohydrat (C₂(H₂PO₄)₂·H₂O), Dicalciumphosphat-Dihydrat (CaHPO₄·2H₂O), Tricalciumphosphat (Ca₅(PO₄)₃OH), saurem Calciumpyrophosphat (CaH₂P₂O₇), Monomagnesiumphosphat-Anhydrat (Mg(H₂PO₄)₂), Dimagnesiumphosphat-Trihydrat (MgHPO₄·3H₂O), Trimagnesiumphosphat-Tetrahydrat (Mg₃(PO₄)₂·4H₂O), Magnesiummetaphosphat ([Mg(PO₃)₂]ₙ), Magnesiumpyrophosphat (Mg₂P₂O₇), Eisen-III-orthophosphat (FePO₄), Eisen-III-pyrophosphat (Fe₄(P₂O₇)₃), Trizinkphosphat-Dihydrat (Zn₃(PO₄)₂·2H₂O), Zinkpyrophosphat (Zn₂P₂O₇), Kupfer-II-pyrophosphat (Cu₂P₂O₇), Natrium-Aluminiumphosphat, saurem Natrium-Aluminiumsulfat, Calciumcarbonat (CaCO₃), Magnesiumhydroxid (Mg(OH)₂), Tricalciumcitrat, Calciumgluconat, Tetranatriumpyrophosphat (Na₄P₂O₇) und Gemischen davon.

Die erfindungsgemäß eingesetzten Verbindungen, die hierin als Mikrowellenabsorber bezeichnet werden, verleihen der Lebensmittelmasse, in welche sie eingearbeitet sind, besondere Eigenschaften beim Erhitzen, Garen oder Backen im Mikrowellenfeld. Es wurde überraschend gefunden, dass die erfindungsgemäßen Mikrowellenabsorber in besonderem Maße dazu beitragen, dass die Mikrowellenenergie bereits an der Oberfläche einer Lebensmittelmasse absorbiert wird. Dadurch kommt es zu einer besonders starken Erhitzung an der Produktoberfläche, wodurch sich ein Erwärmungsverlauf ähnlich demjenigen in einem herkömmlichen Backofen ergibt. Je nach Art des Lebensmittels kann dadurch eine Bräunung der Oberfläche und die Ausbildung einer Kruste erreicht werden. Die Energie der Mikrowellen wird von den erfindungsgemäßen Mikrowellenabsorbern oberflächennah aufgenommen und in Wärme umgewandelt, wodurch ein Erwärmen ähnlich wie in einem konventionellen Backofen stattfindet. Beim Erhitzen von Teigwaren bildet sich beispielsweise die Krume unter ähnlichen Bedingungen wie im Backofen aus, wodurch ein Trieb entwickelt wird, der Volumen gibt und ein gebäcktypisches Porenbild und eine gebäcktypische Porenverteilung liefert.

Ein wesentlicher Vorteil der erfindungsgemäß als Mikrowellenabsorber eingesetzten Verbindungen besteht unter anderem auch darin, dass die erfindungsgemäßen Verbindungen alle gesundheitlich unbedenklich und in den meisten Fällen auch für die Verarbeitung in Lebensmitteln zugelassen sind.

Die vorliegende Erfindung hat sich als ganz besonders vorteilhaft bei der Anwendung in Teigen und Teigprodukten erwiesen. Mit besonderem Vorteil lassen sich beispielsweise gekühlt oder gefroren gelagerte, ungebackene oder vorgebackene Teige, die den erfindungsgemäßen Mikrowellenabsorber enthalten, im Mikrowellenherd zu Produkten mit den gebäcktypischen äußeren und inneren Strukturen und Eigenschaften ausbacken.

Teige für Backwaren unterscheidet man grundsätzlich nach der Art der Teiglockerung (Backtrieb), nämlich durch Hefe getriebene Teige, chemisch getriebene Teige und physikalisch getriebene Teige. Es werden auch verschiedene Kombinationen dieser Triebarten angewendet. Besonders bevorzugt werden die erfindungsgemäßen Mikrowellenabsorber in durch Hefe getriebenen Teigen und physikalisch getriebenen Teigen eingesetzt, da sich bei diesen Teigen unter Verwendung der erfindungsgemäßen Mikrowellenabsorber beim Erhitzen in der Mikrowelle eine dem echten Backprozess in einem Backofen sehr nahe kommende Bräunung der Oberfläche erzielen lässt, was ohne Zusatz der Mikrowellenabsorber nicht erreicht wird.

Die erfindungsgemäßen Mikrowellenabsorber werden zweckmäßigerweise zusätzlich zu den bereits in der Lebensmittelmasse typischerweise vorhandenen Bestandteilen hinzugegeben. Die erfindungsgemäßen Mikrowellenabsorber können entweder einzeln oder in geeigneten Kombinationen hinzugegeben werden.

### Bestimmung des Porenvolumens

Das Porenvolumen im Sinne der vorliegenden Erfindung wird mittels Gasadsorption charakterisiert. Die Aufnahme von Physisorptionsisothermen (Adsorptions- und Desorptionsisothermen) inerter Gasmoleküle bei tiefen Temperaturen wird routinemäßig für die Bestimmung von Festkörperparametern genutzt.

Für die erfindungsgemäße Ermittlung des Porenvolumens wurden Isothermen der Tieftemperatur-Adsorption und -Desorption von gasförmigem Stickstoff als Adsorptiv bei 77,3 K, der Siedetemperatur des flüssigen Stickstoffs, mit einem Adsorptionsautomaten BELSORP-mini II (BEL Japan Inc., Osaka, Japan) erstellt.

Als das Porenvolumen im Sinne der vorliegenden Erfindung ist das Gesamtporenvolumen (Vp; Einheit: cm⁻³/g) der Probe definiert, wobei die Porenradienverteilungsfunktion nach dem BJH-Verfahren aus dem Adsorptionszweig der Isotherme ermittelt wird (Barrett, E.P., Joyner, L.G., Halenda, P.P., The Determination of Pore Volume and Area Distributions in Porous Substances; I. Computations from Nitrogen Isotherms; J. Amer. Cham. Soc., 73 (1951) 373-380). Die BJH-Methode liefert einen Algorithmus zur Berechnung von Porenweitenverteilungen aus Stickstoffadsorptionsdaten unter Annahme einer zylindrischen Porengeometrie. Hierbei wird die Änderung des adsorbierten Volumens in den Poren in Abhängigkeit vom Porenradius betrachtet, wobei die Porenradienverteilungsfunktion als relative Größe auf das Gesamtporenvolumen bezogen ist. Das Gesamtporenvolumen der Probe (Vp) kann aus dem Sättigungsbereich nach der Gurvich-Regel auf dem Adsorptionszweig der Isotherme bei einem relativen Druck p/p0 > 0,995 bestimmt werden (Rouquerol, J., et al., Recommendations for the characterization of porous solids; Pure & Applied Chmistry, 66 (1994) 1739-1758). Es wird davon ausgegangen, dass das gesamte Porensystem mit dem Kapillarkondensat gefüllt ist.

Wie oben bereits ausgeführt wurde, erzeugt die Mikrowellenstrahlung die Wärme im Lebensmittelprodukt selbst durch die dielektrische Erwärmung, basierend auf der Wechselwirkung polarer Gruppen von Molekülen mit dem elektrischen Wechselfeld der elektromagnetischen Schwingung. Um Produkte in einem Mikrowellenherd erwärmen zu können, müssen diese einerseits an die Mikrowellen ankoppeln und andererseits die Mikrowellen absorbieren. Bestimmt wird dieses Verhalten durch die relative Dielektrizitätskonstante, welche eine komplexe Größe ist, deren Realteil die Dielektrizitätskonstante (Speicheranteil) und deren Imaginärteil die Verlustzahl (Energieverlust als Wärme) des Stoffverhaltens beschreibt. Die relative Dielektrizitätskonstante ist abhängig von der Temperatur, der Dichte und der Zusammensetzung des Stoffes. Bei der Mikrowellenerwärmung spielt Wasser die entscheidende Rolle. Je höher der Verlustanteil, desto stärker ist die Erwärmung. Sind neben Wasser weitere Moleküle beteiligt, mit denen Wasser eine Reaktion oder Bindung eingeht, so sinkt die Dielektrizitätskonstante und es steigt die Verlustzahl. Folgende drei Verlustanteile lassen sich beschreiben:
1. Die Dipolrelaxation von freien Wassermolekülen in Teigprodukten, wobei Wasser versucht, sich an dem elektromagnetischen Feld auszurichten.
2. Liegt nicht nur reines Wasser vor, so findet neben der reinen Dipolrelaxation die Relaxation von gebundenem Wasser z. B. in Fetten, Zuckern und Proteinen statt. Die Relaxation ist abhängig von der Bindungsart.
3. Die Ionenleitfähigkeit (Ionenbewegung) zeigt ebenfalls einen Verlusteffekt. Dieser ist abhängig von der Konzentration und der Hydrathülle der Ionen.

Die Erfindung wird nun anhand einiger Ausführungsbeispiele weiter erläutert, welche die Erfindung jedoch nicht beschränken.

### Beispiele

### Beispiel 1: Untersuchung des Eneraieabgabeeffekts verschiedener Substanzen im Vergleich mit reinem Wasser

In einem 100 ml-Becherglas wurden 2,0g zu untersuchende Substanz in 50 ml entmineralisiertem Wasser in einem handelsüblichen Mikrowellengerät bei einer Mikrowellenleistung von etwa 230 Watt (Geräteeinstellung) über einen vorgegebenen Zeitraum der Mikrowellenstrahlung ausgesetzt. Die Temperatur während der Mikrowellenbestrahlung wurde mittels eines in der Mitte des Becherglases angeordneten Thermofühlers gemessen und gegenüber der Zeit aufgetragen. Die Proben wurden einem kontinuierlichen Bestrahlungsprozess ausgesetzt. Jede Bestimmung wurde drei mal wiederholt. Als Referenz diente reines Wasser ohne Zusatz.

Es wurde überraschend gefunden, dass nur solche Substanzen einen positiven Energieabgabeeffekt zeigten, zeigten, die ein Porenvolumen von mehr als 3,0 x 10⁻³ cm³/g und weniger als 200 x 10⁻³ cm³/g und eine Wasserlöslichkeit von weniger als 50 g pro Liter Wasser bei 20°C aufweisen, d. h. die Temperatur der Probe mit 2 g der zu untersuchenden Substanz lag bei oder über der Temperatur des mikrowellenbestrahlten Wassers ohne Zusatz. Erklärt wird dies mit einem Effekt durch gebundenes Wasser an den eingesetzten schwer löslichen Phosphatverbindungen. Schwach gebundenes Wasser an schwer löslichen Phosphatverbindungen zeigt einen zusätzlichen Verlustanteil. Mit Substanzen, die nicht die erfindungsgemäße stoffliche Zusammensetzung, die erfindungsgemäße Wasserlöslichkeit und das erfindungsgemäße Porenvolumen besaßen wurde kein Energieabgabeeffekt beobachtet, d. h. die Temperatur des mikrowellenbestrahlten Wassers ohne Zusatz lag stets über der Temperatur der Probe mit 2 g der zu untersuchenden Substanz. Erklärt wird dies mit einem Ionen-Effekt der eingesetzten löslichen Substanzen. Die benötige Lösungsenthalpie zeigt sich mit einem negativen Temperatureffekt gegenüber reinem Wasser, d. h. einem Energieentzug.

Die Erfinder erklären sich diese Beobachtung damit, dass eine erhöhte Mikrowellenaktivität der untersuchten Substanzen dann auftritt, wenn die Anziehungskräfte zwischen den Wassermolekülen und den untersuchten Substanzen größer sind als die Kräfte, die zwischen den einzelnen Wassermolekülen untereinander wirken. Die sogenannten Kohäsionskräfte zwischen den Molekülen gleicher Art, d. h. zwischen den einzelnen Wassermolekülen, sind geringer als die Adhäsionskräfte (molekulare Anziehungskräfte an den Berührungsflächen) zwischen den Molekülen unterschiedlicher Art, hier also zwischen den Wassermolekülen und den untersuchten Substanzen. Es wird angenommen, dass die potentielle Wasseranlagerung an schwer lösliche oder unlösliche Substanzen im Mikrowellenfeld in der "Fest/Flüssig-Phase" zusätzliche Energie aufgrund der dielektrischen Verluste erzeugt, welche in Form von Wärme frei wird. Im Mikrowellenfeld behindern sich die Substanzmoleküle und die Wassermoleküle gegenseitig, so dass die Polarisation der Moleküle dem elektromagnetischen Wechselfeld nicht mehr folgen kann. Es findet eine Erhitzung des Mediums durch Reibung (dielektrisches Heizen) statt. Durch diesen Mikrowelleneffekt wird die Aufheizzeit von Massen, welche die erfindungsgemäßen Mikrowellenabsorber enthalten, verkürzt bzw. das Aufheizen beschleunigt.

### Beispiel 2: Backversuche mit hefegetriebenen Weizentiefkühlteigen

**Teigzusammensetzung (Grundrezept):**

| | |
|---|---|
| 100 Gew.-Teile | Weizenmehl (Typ 550) |
| 54 Gew.-Teile | Wasser |
| 2 Gew.-Teile | Backhefe |
| 2 Gew.-Teile | Kochsalz |
| 1 Gew.-Teile | Pflanzenöl |

Dem Grundrezept wurden weiterhin 2 Gew.-Teile Mikrowellenabsorber zugesetzt. Der Vergleichsteig enthielt keinen weiteren Zusatz.

**Teigherstellung und -lagerung:**

| | |
|---|---|
| Misch- und Knetzeit: | 3 + 2 Minuten (letztere im Stephan-Mixer) |
| Teig-Ruhezeit: | 20 Minuten |
| Teiglinggewicht: | 200 g |
| Garzeit der Teiglinge: | 20 Minuten |
| Frostzeit: | ca. 4 Stunden |
| Tiefkühl-Lagerzeit: | ca. 2 Tage |

### Auftau- und Backversuche:

Die tiefgefrorenen Teiglinge wurden in einem Mikrowellenherd der Firma Panasonic (Modell: NN-GD560M - Invertmikrowelle) für einen vorgegebenen Zeitraum von 120 Sekunden und bei vorgegebener Mikrowellenleistung von 600 Watt (gemäß Geräteangabe) der Mikrowellenstrahlung ausgesetzt. Nach 2 Minuten Ruhezeit wurde die Temperatur der Kruste und der Krume mittels eines Infrarottemperaturfühlers an verschiedenen Messpunkten des Teiglings gemessen.
Messwert 1 (M1) = gemittelte Krustentemperatur außen
Messwert 2 (M2) = gemittelte Krumentemperatur im Inneren des Teiglings

Die nachfolgende Tabelle 1 gibt die eingesetzten Zusätze ("Produkt"), ihre Löslichkeit in Wasser bei 20°C sowie ihr erfindungsgemäß ermitteltes Porenvolumen an. Die in den Auftau- und Backversuchen gemessenen M1 und M2 sowie die entsprechende Temperaturdifferenz (ΔT) zwischen Krustentemperatur oben und Krumentemperatur des Teiglings sind in Tabelle 1 ebenfalls angegeben. Die letzte Spalte der Tabelle 1 zeigt die Bewertung der Mikrowellenaktivität gemäß der unter der Tabelle angegebenen Bewertungsskala.

**Tabelle 1**

| **Abkürzung** | **Produkt** | **Löslichkeit** | **Porenvolumen [10⁻³ cm³/g]** | **M1 (°C)** | **M2 (°C)** | **ΔT (°C)** | **Mikrowellen-Aktivität** |
|---|---|---|---|---|---|---|---|
| REF | --- (Vergleich) | - | - | 66,7 | 50,2 | 16,5 | 3 |
| MCPA (V) | Monocalciumphosphat-Anhydrat | 18 g/l | 2,3 | 67,1 | 50,1 | 17,0 | 3 |
| MCPM | Monocalciumphosphat-Monohydrat | 18 g/l | 23 | 79,5 | 47,0 | 32,5 | 2 |
| DCPD | Dicalciumphosphat-Dihydrat | 0,1 g/l | 5,3 | 77,4 | 51,2 | 26,2 | 2 |
| TCP | Tricalciumphosphat | 0,2 g/l | 120 | 85,7 | 49,5 | 36,2 | 2 |
| CAPP | Saures Calciumpyrophosphat | <0,1 g/l | 3,6 | 92,0 | 42,0 | 50,0 | 1 |
| MSPA | Monomagnesiumphosphat-Anhydrat | <0,1 g/l | 4,5 | 88,8 | 47,7 | 41,1 | 1 |
| DMP | Dimagnesiumphosphat-Trihydrat | 0,25 g/l | 6,0 | 81,7 | 39,8 | 41,9 | 1 |
| TMP | Trimagnesiumphosphat-Tetrahydrat | <0,1 g/l | 16 | 86,0 | 45,0 | 41,0 | 1 |
| MMP | Magnesiummetaphosphat | <0,1 g/l | 5,1 | 76,9 | 38,5 | 38,4 | 2 |
| MgPP | Magnesiumpyrophosphat | <0,1 g/l | 7,1 | 89,4 | 43,6 | 45,8 | 1 |
| FeOP | Eisen-III-orthophosphat | <0,1 g/l | 19 | 91,2 | 44,2 | 47,0 | 1 |
| FePP | Eisen-III-pyrophosphat | <0,1 g/l | 30 | 83,9 | 41,3 | 42,6 | 1 |
| TZP | Trizinkphosphat-Dihydrat | <0,1 g/l | 6,3 | 82,0 | 44,0 | 38,0 | 2 |
| ZPP | Zinkpyrophosphat | <0,1 g/l | 10,5 | 87,2 | 49,3 | 37,9 | 2 |
| CuPP | Kupfer-II-pyrophosphat | <0,1 g/l | 12 | 87,2 | 49,3 | 37,9 | 2 |
| SALP 1 | Natriumaluminiumphosphat 1:3:8 NaH14Al3(PO4)8 | 15 g/l | 13 | 74,8 | 45,2 | 29,6 | 2 |
| SALP 2 | Natriumaluminiumphosphat 3:2:8 Na3H15Al2(PO4)8 | 15 g/l | 6,4 | 78,3 | 57,8 | 20,5 | 2 |
| SAS | Saures Natriumaluminiumsulfat | 15 g/l | 3,9 | 82,8 | 43,2 | 39,6 | 2 |
| CaCO3 | Calciumcarbonat | 0,014 g/l | 9,0 | 78,6 | 47,1 | 31,5 | 2 |
| Mg(OH)2 | Magnesiumhydroxid | 0,009 g/l | 18,2 | 89,0 | 26,5 | 62,5 | 1 |
| TCC | Tricalciumcitrat | 0,85 g/l | 14,2 | 79,5 | 50,9 | 28,6 | 2 |
| CaGl | Calciumgluconat | 30 g/l | 10,0 | 77,1 | 40,5 | 36,6 | 2 |
| MgCl₂ (V) | Magnesiumchlorid | 542 g/l | 2,0 | 67,1 | 47,3 | 19,8 | 3 |
| AmMD (V) | Ammoniummolybdat | 430 g/l | 2,6 | 75,6 | 51,4 | 24,2 | 3 |
| KTPP (V) | Kaliumtripolyphosphat | >200 g/l | 1,1 | 53,9 | 41,6 | 12,3 | 3 |
| TSPP | Tetranatriumpyrophosphat | 50 g/l | 3,3 | 89,3 | 48,5 | 40,8 | 1 |
| STPP (V) | Natriumtripolyphosphat | 145 g/l | 1,1 | 52,4 | 39,8 | 12,6 | 3 |

### Bewertung der Mikrowellenaktivität in hefegetriebenen Weizentiefkühlteigen

1: ΔT = >40°C = sehr gut
2: ΔT = 25 bis 40°C = gut
3: ΔT = <25 °C = keine zusätzliche Aktivität

Die mit (V) gekennzeichneten Zusätze sind Vergleichsbeispiele.

### Beispiel 3: Backversuche mit Fertigbackmischung

### Teigzusammensetzung (Grundrezept):

Es wurde eine Fertigbackmischung für Zitronenkuchen der Firma Veripan als Grundrezept verwendet.

**Grundrezept:**

| | |
|---|---|
| 23 Gew.-Teile | Weizenmehl (Typ 550) |
| 25 Gew.-Teile | Vollei |
| 25 Gew.-Teile | Zucker |
| 5 Gew.-Teile | Wasser |
| 20 Gew.-Teile | Pflanzenöl |
| 10 Gew.-Teile | Magermilch |
| 2 Gew.-Teile | Fruchtsaftkonzentrat |
| 1 Gew.-Teile | Alkohol |
| 1 Gew.-Teile | Natriumhydrogencarbonat |
| 1 Gew.-Teile | Triebsäure |
| 1,5 Gew.-Teile | Kochsalz |
| 0,1 Gew.-Teile | Aroma |

Dem Grundrezept wurden weiterhin 2 Gew.-Teile Mikrowellenabsorber zugesetzt. Der Vergleichsteig enthielt keinen weiteren Zusatz.

### Teigherstellung und -lagerung:

Vollei und Zucker wurden in einen Mischbehälter gegeben und gemischt. Die Pulvermischung der Fertigzusammensetzung (Weizenmehl, Kochsalz etc.) wurde langsam zugemischt. Anschließend wurden nacheinander Pflanzenöl, Aromastoffe und Alkohol langsam zugegeben und für 12 min gemischt. Danach wurde Backtriebmittel zugesetzt und auf mittlerer Stufe für weitere 2 min gemischt. Danach wurde der Mikrowellenabsorber zugemischt, der Mischer abgestellt, die Masse abgefüllt und kühl gelagert.

### Backversuche:

Die Teiglinge wurden in einem Mikrowellenherd der Firma Panasonic (siehe Beispiel 2) für einen vorgegebenen Zeitraum von 140 Sekunden und bei vorgegebener Mikrowellenleistung von 600 Watt (gemäß Geräteangabe) der Mikrowellenstrahlung ausgesetzt. Nach 1 Minute Ruhezeit wurde die Temperatur des Teiglings mittels einer Wärmebildkamera (Fluke Ti20) gemessen und ausgewertet.
Messwert 1 (M1) = gemittelte Krustentemperatur außen
Messwert 2 (M2) = gemittelte Krumentemperatur im Inneren des Teiglings

Die nachfolgende Tabelle 2 gibt die eingesetzten Zusätze, die Temperaturmesswerte M1 und M2 sowie die entsprechende Temperaturdifferenz (ΔT) zwischen Krustentemperatur und Krumentemperatur des Teiglings wieder. Die letzte Spalte der Tabelle 2 zeigt die Bewertung der Mikrowellenaktivität gemäß der unter der Tabelle angegebenen Bewertungsskala.

**Tabelle 2**

| **Abkürzung** | **Produkt** | **M1 (°C)** | **M2 (°C)** | **ΔT (°C)** | **Mikrowellenaktivität** |
|---|---|---|---|---|---|
| REF | --- (Vergleich) | 52,8 | 65,2 | -12,4 | 3 |
| CAPP | saures Calciumpyrophosphat | 87,8 | 66,6 | 21,2 | 1 |
| MgPP | saures Magnesiumpyrophosphat | 83,6 | 64,5 | 19,1 | 2 |
| FeOP | Eisen-III-orthophosphat | 83,3 | 67,4 | 15,9 | 2 |
| FePP | Eisen-III-pyrophosphat | 80,2 | 53,8 | 26,4 | 1 |

### Bewertung der Mikrowellenaktivität in Teigen der Fertigbackmischung

1: ΔT = >20°C = sehr gut
2: ΔT = 15 bis <20°C = gut
3: ΔT = <15 °C = keine zusätzliche Aktivität

### Beispiel 4: Backversuche mit Blätterteig

### Teigzusammensetzung (Grundrezept):

Es wurde ein Blätterteig der Firma Veripan als Grundrezept verwendet.

| | |
|---|---|
| 100 Gew.-Teile | Weizenmehl (Typ 550) |
| 55 Gew.-Teile | Wasser |
| 70 Gew.-Teile | Pflanzenfett (Margarine) |
| 3 Gew.-Teile | Salz |
| 3 Gew.-Teile | Emulgator (Ascorbinsäure) |
| 1 Gew.-Teile | Konservierungsmittel |
| 1 Gew.-Teile | Backmittel |
| 3 Gew.-Teile | Invertzucker (Dextrose) |

Dem Grundrezept wurden weiterhin 2 Gew.-Teile Mikrowellenabsorber zugesetzt. Der Vergleichsteig enthielt keinen weiteren Zusatz.

### Teigherstellung und -lagerung:

Weizenmehl, Invertzucker, Emulgator und ggf. Mikrowellenabsorber wurden in einen Mischbehälter gegeben und gemischt. Das Wasser und 20% des Pflanzenfetts wurden zugegeben und für 3 min bei niedriger Stufe und für 5 min bei mittlerer Stufe mit einem Spiralkneter geknetet. Die Teigtemperatur wurde kontrolliert. Die Solltemperatur betrug 18 °C. Danach wurde das restliche Pflanzenfett in den Teig eingeschlagen. Anschließend wurde der Teig im Abstand von jeweils 30 min in 4 Arbeitsschritten gefaltet und zwar 2 einfache und 2 doppelte Touren. Diese ergeben rechnerisch 144 Fettlagen (Margarine), aufgeteilt in sehr dünne Teig- und Fettschichten. Vor der Verarbeitung wurde der Teig für 12 Stunden gekühlt gelagert.

### Auftau- und Backversuche:

Es wurden ungebackene Blätterteig-Rondelle ohne Füllung sowie vorgebackene Blätterteigtasche (Hotpockets) mit Tomatensaucenfüllung jeweils als tiefgefrorene Teiglinge in einem Mikrowellenherd der Firma Panasonic (siehe Beispiel 2) für einen vorgegebenen Zeitraum und bei vorgegebener Mikrowellenleistung der Mikrowellenstrahlung ausgesetzt. Nach 30 Minuten Ruhezeit wurde die Temperatur des Teiglings mittels einer Wärmebildkamera (Fluke Ti20) gemessen und ausgewertet.
Messwert 1 (M1) = gemittelte Krustentemperatur außen
Messwert 2 (M2) = gemittelte Krumentemperatur im Inneren des Teiglings

### Mikrowellenbestrahlung:

Blätterteig-Rondelle (BLT-RO): 440 Watt; 200 Sekunden
Blätterteig-Hotpockets (BLT-HP): 600 Watt; 300 Sekunden

Die nachfolgende Tabelle 3 gibt die eingesetzten Zusätze, die Temperaturmesswerte M1 und M2 sowie die entsprechende Temperaturdifferenz (ΔT) zwischen Krustentemperatur und Krumentemperatur des Teiglings wieder. Die letzte Spalte der Tabelle 3 zeigt die Bewertung der Mikrowellenaktivität gemäß der unter der Tabelle angegebenen Bewertungsskala.

**Tabelle 3**

| **Abkürzung** | **Produkt** | **M1 (°C)** | **M2 (°C)** | **ΔT (°C)** | **Mikrowellenaktivität** |
|---|---|---|---|---|---|
| REF | --- (Vergleich) | 91,6 | 86,7 | 4,9 | 3 |
| CAPP | saures Calciumpyrophosphat | 102,0 | 75,5 | 26,1 | 1 |
| MgPP | saures Magnesiumpyrophosphat | 92,9 | 77,7 | 15,2 | 2 |
| FeOP | Eisen-III-orthophosphat | 93,8 | 78,7 | 15,1 | 2 |
| FePP | Eisen-III-pyrophosphat | 110,0 | 92,6 | 16,9 | 2 |

### Bewertung der Mikrowellenaktivität in Blätterteigen

1: ΔT = >20°C = sehr gut
2: ΔT = 15 bis <20°C = gut
3: ΔT = <15 °C = keine zusätzliche Aktivität

In den Teiglingen ohne Zusatz eines Mikrowellenabsorbers waren die Kerntemperatur und die Oberflächentemperatur vergleichbar hoch. Die Teiglinge mit den erfindungsgemäßen Zusätzen zeigten eine gegenüber der Kerntemperatur deutlich höhere Oberflächentemperatur.

## Patentansprüche

1. Verfahren zum Auftauen, Erhitzen, Garen und/oder Backen einer Lebensmittelmasse, insbesondere eines teigbasierten Produkts, einer Teigware, eines Gefrierteigs, einer Panade, eines Fleischteigs oder eines Gemüseteigs, im Mikrowellenfeld, **dadurch gekennzeichnet, dass** die Lebensmittelmasse einen zugesetzten Mikrowellenabsorber in einer Menge von 0,5 bis 5,0 Gew.-%, bezogen auf das Gesamtgewicht der Lebensmittelmasse, enthält,
wobei der Mikrowellenabsorber unter Orthophosphaten (PO₄)³⁻, Hydrogenphosphaten (HPO₄)²⁻, Dihydrogenphosphaten (H₂PO₄)⁻, Diphosphaten (P₂O₇)⁴⁻ (Pyrophosphaten), Metaphosphaten [(PO₃)₂²⁻]ₙ, Tripolyphosphaten (P₃O₁₀)⁵⁻ oder höher kondensierten Phosphaten mit einer mittleren Kettenlänge von 3 bis 50, Carbonaten, Hydroxiden, Citraten und Gluconaten der Metalle Calcium (Ca), Magnesium (Mg), Eisen (Fe), Zink (Zn) und Kupfer (Cu) ausgewählt ist, mit der Maßgabe, dass die Wasserlöslichkeit des Mikrowellenabsorbers bei 20°C kleiner oder gleich 50 g/L Wasser ist und der Mikrowellenabsorber ein Porenvolumen von mehr als 3,0 x 10⁻³ cm³/g und weniger als 200 x 10⁻³ cm³/g aufweist.

2. Verfahren nach Anspruch 1, **dadurch gekennzeichnet, dass** die Lebensmittelmasse den zugesetzten Mikrowellenabsorber in einer Menge von 1,0 bis 4,0 Gew.-%, vorzugsweise von 1,5 bis 3,0 Gew.-%, bezogen auf das Gesamtgewicht der Lebensmittelmasse, enthält.

3. Verfahren nach einem der vorangegangenen Ansprüche, **dadurch gekennzeichnet, dass** die Wasserlöslichkeit des Mikrowellenabsorbers bei 20°C kleiner oder gleich 20 g/L Wasser, vorzugsweise kleiner oder gleich 5 g/L Wasser ist.

4. Verfahren nach einem der vorangegangenen Ansprüche, **dadurch gekennzeichnet, dass** der Mikrowellenabsorber ein Porenvolumen von weniger als 150 x 10⁻³ cm³/g, vorzugsweise von weniger als 125 x 10⁻³ cm³/g aufweist.

5. Verfahren nach einem der vorangegangenen Ansprüche, **dadurch gekennzeichnet, dass** der Mikrowellenabsorber ausgewählt ist unter Monocalciumphosphat-Anhydrat (Ca(H₂PO₄)₂), Monocalciumphosphat-Monohydrat (Ca(H₂PO₄)₂·H₂O), Dicalciumphosphat-Dihydrat (CaHPO₄·2H₂O), Tricalciumphosphat (Ca₅(PO₄)₃OH), saurem Calciumpyrophosphat (CaH₂P₂O₇), Monomagnesiumphosphat-Anhydrat (Mg(H₂PO₄)₂), Dimagnesi-umphosphat-Trihydrat (MgHPO₄·3H2O), Trimagnesiumphosphat-Tetrahydrat (Mg₃(PO₄)₂·4H₂O), Magnesiummetaphosphat ([Mg(PO₃)₂]ₙ), Magnesiumpyrophosphat (Mg₂P₂O₇), Eisen-III-orthophosphat (FePO₄), Eisen-III-pyrophosphat (Fe₄(P₂O₇)₃), Trizinkphosphat-Dihydrat (Zn₃(PO₄)₂·2H₂O), Zinkpyrophosphat (Zn₂P₂O₇), Kupfer-II-pyrophosphat (Cu₂P₂O₇), Natrium-Aluminiumphosphat, saurem Natrium-Aluminiumsulfat, Calciumcarbonat (CaCO₃), Magnesiumhydroxid (Mg(OH)₂), Tricalciumcitrat, Calciumgluconat, Tetranatriumpyrophosphat (Na₄P₂O₇) und Gemischen davon.

6. Verwendung von Orthophosphaten (PO₄)³⁻, Hydrogenphosphaten (HPO₄)²⁻, Dihydrogenphosphaten (H₂PO₄)⁻, Diphosphaten (P₂O₇)⁴⁻ (Pyrophosphaten), Metaphosphaten [(PO₃)₂²⁻]ₙ, Tripolyphosphaten (P₃O₁₀)⁵⁻ oder höher kondensierten Phosphaten mit einer mittleren Kettenlänge von 3 bis 50, Carbonaten, Hydroxiden, Citraten und Gluconaten der Metalle Calcium (Ca), Magnesium (Mg), Eisen (Fe), Zink (Zn) und Kupfer (Cu) als Mikrowellenabsorber für die Herstellung einer Lebensmittelmasse, insbesondere eines teigbasierten Produkts, einer Teigware, eines Gefrierteigs, einer Panade, eines Fleischteigs oder eines Gemüseteigs, mit der Maßgabe, dass die Wasserlöslichkeit des Mikrowellenabsorbers bei 20°C kleiner oder gleich 50 g/L Wasser ist und der Mikrowellenabsorber ein Porenvolumen von mehr als 3,0 x 10⁻³ cm³/g und weniger als 200 x 10⁻³ cm³/g aufweist.

7. Verwendung nach Anspruch 6, **dadurch gekennzeichnet, dass** die Lebensmittelmasse den zugesetzten Mikrowellenabsorber in einer Menge von 0,5 bis 5,0 Gew.-%, vorzugsweise von 1,0 bis 4,0 Gew.-%, besonders bevorzugt in einer Menge von 1,5 bis 3,0 Gew.-%, bezogen auf das Gesamtgewicht der Lebensmittelmasse, enthält.

8. Verwendung nach einem der Ansprüche 6 oder 7, **dadurch gekennzeichnet, dass** die Wasserlöslichkeit des Mikrowellenabsorbers bei 20°C kleiner oder gleich 20 g/L Wasser, vorzugsweise kleiner oder gleich 5 g/L Wasser ist.

9. Verwendung nach einem der Ansprüche 6 bis 8, **dadurch gekennzeichnet, dass** der Mikrowellenabsorber ein Porenvolumen von weniger als 150 x 10⁻³ cm³/g, vorzugsweise von weniger als 125 x 10⁻³ cm³/g aufweist.

10. Verwendung nach einem der Ansprüche 6 bis 9, **dadurch gekennzeichnet, dass** der Mikrowellenabsorber ausgewählt ist unter Monocalciumphosphat-Anhydrat (Ca(H₂PO₄)₂), Monocalciumphosphat-Monohydrat (Ca(H₂PO₄)₂·H₂O), Dicalciumphosphat-Dihydrat (CaHPO₄·2H₂O), Tricalciumphosphat (Ca₅(PO₄)₃OH), saurem Calciumpyrophosphat (CaH₂P₂O₇), Monomagnesiumphosphat-Anhydrat (Mg(H₂PO₄)₂), Dimagnesiumphosphat-Trihydrat (MgHPO₄·3H₂O), Trimagnesiumphosphat-Tetrahydrat (Mg₃(PO₄)₂·4H₂O), Magnesiummetaphosphat ([Mg(PO₃)₂]ₙ), Magnesiumpyrophosphat (Mg₂P₂O₇), Eisen-III-orthophosphat (FePO₄), Eisen-III-pyrophosphat (Fe₄(P₂O₇)₃), Trizinkphosphat-Dihydrat (Zn₃(PO₄)₂·2H₂O), Zinkpyrophosphat (Zn₂P₂O₇), Kupfer-II-pyrophosphat (Cu₂P₂O₇), Natrium-Aluminiumphosphat, saurem Natrium-Aluminiumsulfat, Calciumcarbonat (CaCO₃), Magnesiumhydroxid (Mg(OH)₂), Tricalciumcitrat, Calciumgluconat, Tetranatriumpyrophosphat (Na₄P₂O₇) und Gemischen davon.

11. Lebensmittelmasse, insbesondere teigbasiertes Produkt, Teigware, Gefrierteig, Panade, Fleischteig oder Gemüseteig, welche zusätzlich zu den für die Lebensmittelmasse üblichen Bestandteilen einen zugesetzten Mikrowellenabsorber in einer Menge von 0,5 bis 5,0 Gew.-%, bezogen auf das Gesamtgewicht der Lebensmittelmasse, enthält,
wobei der Mikrowellenabsorber unter Orthophosphaten (PO₄)³⁻, Hydrogenphosphaten (HPO₄)²⁻, Dihydrogenphosphaten (H₂PO₄)⁻, Diphosphaten (P₂O₇)⁴⁻ (Pyrophosphaten), Metaphosphaten [(PO₃)₂²⁻]ₙ, Tripolyphosphaten (P₃O₁₀)⁵⁻ oder höher kondensierten Phosphaten mit einer mittleren Kettenlänge von 3 bis 50, Carbonaten, Hydroxiden, Citraten und Gluconaten der Metalle Calcium (Ca), Magnesium (Mg), Eisen (Fe), Zink (Zn) und Kupfer (Cu) ausgewählt ist, mit der Maßgabe, dass die Wasserlöslichkeit des Mikrowellenabsorbers bei 20°C kleiner oder gleich 50 g/L Wasser ist und der Mikrowellenabsorber ein Porenvolumen von mehr als 3,0 x 10⁻³ cm³/g und weniger als 200 x 10⁻³ cm³/g aufweist.

12. Lebensmittelmasse nach Anspruch 11, **dadurch gekennzeichnet, dass** die Lebensmittelmasse den zugesetzten Mikrowellenabsorber in einer Menge von 1,0 bis 4,0 Gew.-%, vorzugsweise von 1,5 bis 3,0 Gew.-%, bezogen auf das Gesamtgewicht der Lebensmittelmasse, enthält.

13. Lebensmittelmasse nach einem der Ansprüche 11 oder 12, **dadurch gekennzeichnet, dass** die Wasserlöslichkeit des Mikrowellenabsorbers bei 20°C kleiner oder gleich 20 g/L Wasser, vorzugsweise kleiner oder gleich 5 g/L Wasser ist.

14. Lebensmittelmasse nach einem der Ansprüche 11 bis 13, **dadurch gekennzeichnet, dass** der Mikrowellenabsorber ein Porenvolumen von weniger als 150 x 10⁻³ cm³/g, vorzugsweise von weniger als 125 x 10⁻³ cm³/g aufweist.

15. Lebensmittelmasse nach einem der Ansprüche 11 bis 14, **dadurch gekennzeichnet, dass** der Mikrowellenabsorber ausgewählt ist unter Monocalciumphosphat-Anhydrat (Ca(H₂PO₄)₂), Monocalciumphosphat-Monohydrat (Ca(H₂PO₄)₂·H₂O), Dicalciumphosphat-Dihydrat (CaHPO₄·2H₂O), Tricalciumphosphat (Ca₅(PO₄)₃OH), saurem Calciumpyrophosphat (CaH₂P₂O₇), Monomagnesiumphosphat-Anhydrat (Mg(H₂PO₄)₂), Dimagnesiumphosphat-Trihydrat (MgHPO₄·3H₂O), Trimagnesiumphosphat-Tetrahydrat (Mg₃(PO₄)₂·4H₂O), Magnesiummetaphosphat ([Mg(PO₃)₂]ₙ), Magnesiumpyrophosphat (Mg₂P₂O₇), Eisen-III-orthophosphat (FePO₄), Eisen-III-pyrophosphat (Fe₄(P₂O₇)₃), Trizinkphosphat-Dihydrat (Zn₃(PO₄)₂·2H₂O), Zinkpyrophosphat (Zn₂P₂O₇), Kupfer-II-pyrophosphat (Cu₂P₂O₇), Natrium-Aluminiumphosphat, saurem Natrium-Aluminiumsulfat, Calciumcarbonat (CaCO₃), Magnesiumhydroxid (Mg(OH)₂), Tricalciumcitrat, Calciumgluconat, Tetranatriumpyrophosphat (Na₄P₂O₇) und Gemischen davon.

## Claims

1. A method of thawing, heating, cooking and/or baking a foodstuff material, in particular a dough-based product, a pasta, a frozen dough, a panada, a meat dough or a vegetable dough, in a microwave field, **characterised in that** the foodstuff material contains an added microwave absorber in an amount of 0.5 to 5.0% by weight with respect to the total weight of the foodstuff material,
wherein the microwave absorber is selected from orthophosphates (PO₄)³⁻, hydrogen phosphates (HPO₄)²⁻, dihydrogen phosphates (H₂PO₄)⁻, diphosphates (P₂O₇)⁴⁻ (pyrophosphates), metaphosphates [(PO₃)₂²⁻]ₙ, tripolyphosphates (P₃O₁₀)⁵⁻ or more highly condensed phosphates with an average chain length of 3 to 50, carbonates, hydroxides, citrates and gluconates of the metals calcium (Ca), magnesium (Mg), iron (Fe), zinc (Zn) and copper (Cu) with the proviso that the water solubility of the microwave absorber at 20°C is less than or equal to 50g/L water and the microwave absorber has a pore volume of more than 3.0 x 10⁻³ cm³/g and less than 200 x 10⁻³ cm³/g.

2. A method according to claim 1 **characterised in that** the foodstuff material contains the added microwave absorber in an amount of 1.0 to 4.0% by weight, preferably 1.5 to 3.0% by weight, with respect to the total weight of the foodstuff material.

3. A method according to one of the preceding claims **characterised in that** the water solubility of the microwave absorber at 20°C is less than or equal to 20 g/L water, preferably less than or equal to 5 g/L water.

4. A method according to one of the preceding claims **characterised in that** the microwave absorber has a pore volume of less than 150 x 10⁻³ cm³/g, preferably less than 125 x 10⁻³ cm³/g.

5. A method according to one of the preceding claims **characterised in that** the microwave absorber is selected from monocalcium phosphate anhydrate (Ca(H₂PO₄)₂), monocalcium phosphate monohydrate (Ca(H₂PO₄)₂·H₂O), dicalcium phosphate dihydrate (Ca-HPO₄·2H₂O), tricalcium phosphate (Ca₅(PO₄)₃OH), acid calcium pyrophosphate (CaH₂P₂O₇), monomagnesium phosphate anhydrate (Mg(H₂PO₄)₂), dimagnesium phosphate trihydrate (MgHPO₄·3H₂O), trimagnesium phosphate tetrahydrate (Mg₃(PO₄)₂·4H₂O), magnesium metaphosphate ([Mg(PO₃)₂]ₙ), magnesium pyrophosphate (Mg₂P₂O₇), iron-III-orthophosphate (FeP04), iron-III-pyrophosphate (Fe₄(P₂O₇)₃), trizinc phosphate dihydrate (Zn₃(PO₄)·2H₂O), zinc pyrophosphate (Zn₂P₂O₇), copper-II-pyrophosphate (Cu₂P₂O₇), sodium aluminium phosphate, acid sodium aluminium sulphate, calcium carbonate (CaCO₃), magnesium hydroxide (Mg(OH)₂), tricalcium citrate, calcium gluconate, tetrasodium pyrophosphate (Na₄P₂O₇) and mixtures thereof.

6. Use of orthophosphates (PO₄)³⁻, hydrogen phosphates (HPO₄)²⁻, dihydrogen phosphates (H₂PO₄)⁻, diphosphates (P₂O₇)⁴⁻ (pyrophosphates), metaphosphates [(PO₃)₂²⁻]ₙ, tripolyphosphates (P₃O₁₀)⁵⁻ or more highly condensed phosphates with an average chain length of 3 to 50, carbonates, hydroxides, citrates and gluconates of the metals calcium (Ca), magnesium (Mg), iron (Fe), zinc (Zn) and copper (Cu) as microwave absorbers for the production of a foodstuff material, in particular a dough-based product, a pasta, a frozen dough, a panada, a meat dough or a vegetable dough, with the proviso that the water solubility of the microwave absorber at 20°C is less than or equal to 50g/L water and the microwave absorber has a pore volume of more than 3.0 x 10⁻³ cm³/g and less than 200 x 10⁻³ cm³/g.

7. A use according to claim 6 **characterised in that** the foodstuff material contains the added microwave absorber in an amount of 0.5 to 5.0% by weight, preferably 1.0 to 4.0% by weight, particularly preferably in an amount of 1.5 to 3.0% by weight with respect to the total weight of the foodstuff material.

8. A use according to one of claims 6 or 7 **characterised in that** the water solubility of the microwave absorber at 20°C is less than or equal to 20 g/L water, preferably less than or equal to 5 g/L water.

9. A use according to one of claims 6 to 8 **characterised in that** the microwave absorber has a pore volume of less than 150 x 10⁻³ cm³/g, preferably less than 125 x 10⁻³ cm³/g.

10. A use according to one of claims 6 to 9 **characterised in that** the microwave absorber is selected from monocalcium phosphate anhydrate (Ca(H₂PO₄)₂), monocalcium phosphate monohydrate (Ca(H₂PO₄)₂·H₂O), dicalcium phosphate dihydrate (CaHPO₄·2H₂O), tricalcium phosphate (Ca₅(PO₄)₃OH), acid calcium pyrophosphate (CaH₂P₂O₇), monomagnesium phosphate anhydrate (Mg(H₂PO₄)₂), dimagnesium phosphate trihydrate (MgHPO₄·3H₂O), trimagnesium phosphate tetrahydrate (Mg₃(PO₄)₂·4H₂O), magnesium metaphosphate ([Mg(PO₃)₂]ₙ), magnesium pyrophosphate (Mg₂P₂O₇), iron-III-orthophosphate (FePO₄), iron-III-pyrophosphate (Fe₄(P₂O₇)₃), trizinc phosphate dihydrate (Zn₃(PO₄)·2H₂O), zinc pyrophosphate (Zn₂P₂O₇), copper-II-pyrophosphate (Cu₂P₂O₇), sodium aluminium phosphate, acid sodium aluminium sulphate, calcium carbonate (CaCO₃), magnesium hydroxide (Mg(OH)₂), tricalcium citrate, calcium gluconate, tetrasodium pyrophosphate (Na₄P₂O₇) and mixtures thereof.

11. A foodstuff material, in particular a dough-based product, pasta, frozen dough, panada, meat dough or vegetable dough, which in addition to the constituents usual for the foodstuff material contains an added microwave absorber in an amount of 0.5 to 5.0% by weight with respect to the total weight of the foodstuff material,
wherein the microwave absorber is selected from orthophosphates (PO₄)³⁻, hydrogen phosphates (HPO₄)²⁻, dihydrogen phosphates (H₂PO₄)⁻, diphosphates (P₂O₇)⁴⁻ (pyrophosphates), metaphosphates [(PO₃)₂²⁻]ₙ, tripolyphosphates (P₃O₁₀)⁵⁻ or more highly condensed phosphates with an average chain length of 3 to 50, carbonates, hydroxides, citrates and gluconates of the metals calcium (Ca), magnesium (Mg), iron (Fe), zinc (Zn) and copper (Cu) with the proviso that the water solubility of the microwave absorber at 20°C is less than or equal to 50g/L water and the microwave absorber has a pore volume of more than 3.0 x 10⁻³ cm³/g and less than 200 x 10⁻³ cm³/g.

12. A foodstuff material according to claim 11 **characterised in that** the foodstuff material contains the added microwave absorber in an amount of 1.0 to 4.0% by weight, preferably 1.5 to 3.0% by weight, with respect to the total weight of the foodstuff material.

13. A foodstuff material according to one of claims 11 or 12 **characterised in that** the water solubility of the microwave absorber at 20°C is less than or equal to 20 g/L water, preferably less than or equal to 5 g/L water.

14. A foodstuff material according to one of claims 11 to 13 **characterised in that** the microwave absorber has a pore volume of less than 150 x 10⁻³ cm³/g, preferably less than 125 x 10⁻³ cm³/g.

15. A foodstuff material according to one of claims 11 to 14 **characterised in that** the microwave absorber is selected from monocalcium phosphate anhydrate (Ca(H₂PO₄)₂), monocalcium phosphate monohydrate (Ca(H₂PO₄)₂·H₂O), dicalcium phosphate dihydrate (CaHPO₄·2H₂O), tricalcium phosphate (Ca₅(PO₄)₃OH), acid calcium pyrophosphate (CaH₂P₂O₇), monomagnesium phosphate anhydrate (Mg(H₂PO₄)₂), dimagnesium phosphate trihydrate (MgHPO₄·3H₂O), trimagnesium phosphate tetrahydrate (Mg₃(PO₄)₂·4H₂O), magnesium metaphosphate ([Mg(PO₃)₂]ₙ), magnesium pyrophosphate (Mg₂P₂O₇), iron-III-orthophosphate (FeP04), iron-III-pyrophosphate (Fe₄(P₂O₇)₃), trizinc phosphate dihydrate (Zn₃(PO₄)·2H₂O), zinc pyrophosphate (Zn₂P₂O₇), copper-II-pyrophosphate (Cu₂P₂O₇), sodium aluminium phosphate, acid sodium aluminium sulphate, calcium carbonate (CaCO₃), magnesium hydroxide (Mg(OH)₂), tricalcium citrate, calcium gluconate, tetrasodium pyrophosphate (Na₄P₂O₇) and mixtures thereof.

## Revendications

1. Procédé de décongélation, de réchauffage, de cuisson et/ou de cuisson au four d'une préparation alimentaire, en particulier d'un produit à base de pâte, d'un produit de boulangerie, d'une pâte surgelée, d'un produit de panure, d'une pâte à la viande ou d'une pâte aux légumes, dans un champ de micro-ondes, **caractérisé en ce que** la préparation alimentaire contient un absorbeur de micro-ondes ajouté en une proportion de 0,5 à 5,0 % en poids par rapport au poids total de la préparation alimentaire,
l'absorbeur de micro-ondes étant choisi parmi des orthophosphates (PO₄)³⁻, des hydrogénophosphates (HPO₄)²⁻, des dihydrogénophosphates (H₂PO₄)⁻, des diphosphates (P₂O₇)⁴⁻ (pyrophosphates), des métaphosphates [(PO₃)₂²⁻]ₙ, des tripolyphosphates (P₃O₁₀)⁵⁻ ou des phosphates plus condensés présentant une longueur de chaîne moyenne de 3 à 50, des carbonates, des hydroxydes, des citrates et des gluconates des métaux calcium (Ca), magnésium (Mg), fer (Fe), zinc (Zn) et cuivre (Cu), sous réserve que la solubilité dans l'eau de l'absorbeur de micro-ondes à 20°C soit inférieure ou égale à 50 g/L d'eau et que l'absorbeur de micro-ondes présente un volume de pores supérieur à 3,0 x 10⁻³ cm³/g et inférieur à 200 x 10⁻³ cm³/g.

2. Procédé selon la revendication 1, **caractérisé en ce que** la préparation alimentaire contient l'absorbeur de micro-ondes ajouté en une proportion de 1,0 à 4,0 % en poids, de préférence de 1,5 à 3,0 % en poids par rapport au poids total de la préparation alimentaire.

3. Procédé selon l'une quelconque des revendications précédentes, **caractérisé en ce que** la solubilité dans l'eau de l'absorbeur de micro-ondes à 20°C est inférieure ou égale à 20 g/L d'eau, de préférence inférieure ou égale à 5 g/L d'eau.

4. Procédé selon l'une quelconque des revendications précédentes, **caractérisé en ce que** l'absorbeur de micro-ondes présente un volume de pores inférieur à 150 x 10⁻³ cm³/g, de préférence inférieur à 125 x 10⁻³ cm³/g.

5. Procédé selon l'une quelconque des revendications précédentes, **caractérisé en ce que** l'absorbeur de micro-ondes est choisi parmi le phosphate monocalcique anhydre (Ca(H₂PO₄)₂), le phosphate monocalcique monohydrate (Ca(H₂PO₄)²·H₂O), le phosphate dicalcique dihydrate (CaHPO₄·2H₂O) le phosphate tricalcique (Ca₅(PO₄)₃OH), le pyrophosphate de calcium acide (CaH₂P₂O₇), le phosphate monomagnésique anhydre (Mg(H₂PO₄)₂), le phosphate dimagnésique trihydrate (MgHPO₄·3H₂O), le phosphate trimagnésique tétrahydrate (Mg₃(PO₄)₂·4H₂O), le métaphosphate de magnésium ([Mg(PO₃)₂]ₙ), le pyrophosphate de magnésium (Mg₂P₂O₇), l' orthophosphate ferrique (FePO₄), le pyrophosphate ferrique (Fe₄(P₂O₇)₃), le phosphate de trizinc dihydrate (Zn₃(PO₄)_{2·}2H₂O), le pyrophosphate de zinc (Zn₂P₂O₇), le pyrophosphate de cuivre II (Cu₂P₂O₇), le phosphate de sodium-aluminium, le sulfate de sodium-aluminium acide, le carbonate de calcium (CaCO₃), l'hydroxyde de magnésium (Mg(OH)₂), le citrate de tricalcium, le gluconate de calcium, le pyrophosphate de tétrasodium (Na₄P₂O₇) et leurs mélanges.

6. Utilisation d'orthophosphates (PO₄)³⁻, d'hydrogénophosphates (HPO₄)²⁻, de dihydrogénophosphates (H₂PO₄)⁻, de diphosphates (P₂O₇)⁴⁻ (pyrophosphates), de métaphosphates [(PO₃)₂²⁻]ₙ, de tripolyphosphates (P₃O₁₀)⁵- ou de phosphates plus condensés présentant une longueur de chaîne moyenne de 3 à 50, de carbonates, d'hydroxydes, de citrates et de gluconates des métaux calcium (Ca), magnésium (Mg), fer (Fe), zinc (Zn) et cuivre (Cu) comme absorbeurs de micro-ondes pour la fabrication d'une préparation alimentaire, en particulier d'un produit à base de pâte, d'un produit de boulangerie, d'une pâte surgelée, d'un produit de panure, d'une pâte à la viande ou d'une pâte aux légumes, sous réserve que la solubilité dans l'eau de l'absorbeur de micro-ondes à 20°C soit inférieure ou égale à 50 g/L d'eau et que l'absorbeur de micro-ondes présente un volume de pores supérieur à 3,0 x 10⁻³ cm³/g et inférieur à 200 x 10⁻³ cm³/g.

7. Utilisation selon la revendication 6, **caractérisée en ce que** la préparation alimentaire contient l'absorbeur de micro-ondes ajouté en une proportion de 0,5 à 5,0 % en poids, de préférence de 1,5 à 4,0 % en poids, de manière particulièrement préférée en une proportion de 1,5 à 3,0 % en poids, par rapport au poids total de la préparation alimentaire.

8. Utilisation selon l'une quelconque des revendications 6 ou 7, **caractérisée en ce que** la solubilité dans l'eau de l'absorbeur de micro-ondes à 20°C est inférieure ou égale à 20 g/L d'eau, de préférence inférieure ou égale à 5 g/L d'eau.

9. Utilisation selon l'une quelconque des revendications 6 à 8, **caractérisée en ce que** l'absorbeur de micro-ondes présente un volume de pores inférieur à 150 x 10⁻³ cm³/g, de préférence inférieur à 125 x 10⁻³ cm³/g.

10. Utilisation selon l'une quelconque des revendications 6 à 9, **caractérisée en ce que** l'absorbeur de micro-ondes est choisi parmi le phosphate monocalcique anhydre (Ca(H₂PO₄)₂), le phosphate monocalcique monohydrate (Ca(H₂PO₄)₂·H₂O), le phosphate dicalcique dihydrate (CaHPO₄-2H₂O), le phosphate tricalcique (Ca₅(PO₄)₃OH), le pyrophosphate de calcium acide (CaH₂P₂O₇), le phosphate monomagnésique anhydre (Mg(H₂PO₄)₂), le phosphate dimagnésique trihydrate (MgHPO₄·3H₂O), le phosphate trimagnésique tétrahydrate (Mg₃(PO₄)₂·4H₂O), le métaphosphate de magnésium ([Mg(PO₃)₂]ₙ), le pyrophosphate de magnésium (Mg₂P₂O₇), 'orthophosphate ferrique (FePO₄), le pyrophosphate ferrique (Fe₄(P₂O₇)₃), le phosphate de trizinc dihydrate (Zn₃(PO₄)₂·2H₂O), le pyrophosphate de zinc (Zn₂P₂O₇), le pyrophosphate de cuivre II (Cu₂P₂O₇), le phosphate de sodium-aluminium, le sulfate de sodium-aluminium acide, le carbonate de calcium (CaCO₃), l'hydroxyde de magnésium (Mg(OH)₂), le citrate de tricalcium, le gluconate de calcium, le pyrophosphate de tétrasodium (Na₄P₂O₇) et leurs mélanges.

11. Préparation alimentaire, en particulier produit à base de pâte, produit de boulangerie, pâte surgelée, produit de panure, pâte à la viande ou pâte aux légumes, laquelle contient en plus des composants habituels pour la préparation alimentaire un absorbeur de micro-ondes ajouté en une proportion de 0,5 à 5,0 % en poids par rapport au poids total de la préparation alimentaire,
l'absorbeur de micro-ondes étant choisi parmi des orthophosphates (PO₄)³⁻, des hydrogénophosphates (HPO₄)²⁻, des dihydrogénophosphates (H₂PO₄)⁻, des diphosphates (P₂O₇)⁴⁻ (pyrophosphates), des métaphosphates [(PO₃)₂²⁻]ₙ, des tripolyphosphates (P₃O₁₀)⁵⁻ ou des phosphates plus condensés présentant une longueur de chaîne moyenne de 3 à 50, des carbonates, des hydroxydes, des citrates et des gluconates des métaux calcium (Ca), magnésium (Mg), fer (Fe), zinc (Zn) et cuivre (Cu), sous réserve que la solubilité dans l'eau de l'absorbeur de micro-ondes à 20°C soit inférieure ou égale à 50 g/L d'eau et que l'absorbeur de micro-ondes présente un volume de pores supérieur à 3,0 x 10⁻³ cm³/g et inférieur à 200 x 10⁻³ cm³/g.

12. Préparation alimentaire selon la revendication 11, **caractérisée en ce que** la préparation alimentaire contient l'absorbeur de micro-ondes ajouté en une proportion de 1,0 à 4,0 % en poids, de préférence de 1,5 à 3,0 % en poids par rapport au poids total de la préparation alimentaire.

13. Préparation alimentaire selon l'une quelconque des revendications 11 ou 12, **caractérisée en ce que** la solubilité dans l'eau de l'absorbeur de micro-ondes à 20°C est inférieure ou égale à 20 g/L d'eau, de préférence inférieure ou égale à 5 g/L d'eau.

14. Préparation alimentaire selon l'une quelconque des revendications 11 à 13, **caractérisée en ce que** l'absorbeur de micro-ondes présente un volume de pores inférieur à 150 x 10⁻³ cm³/g, de préférence inférieur à 125 x 10⁻³ cm³/g.

15. Préparation alimentaire selon l'une quelconque des revendications 11 à 14, **caractérisée en ce que** l'absorbeur de micro-ondes est choisi parmi le phosphate monocalcique anhydre (Ca(H₂PO₄)₂), le phosphate monocalcique monohydrate (Ca(H₂PO₄)₂·H2O), le phosphate dicalcique dihydrate (CaHPO₄-2H₂O), le phosphate tricalcique (Ca₅(PO₄)₃OH), le pyrophosphate de calcium acide (CaH₂P₂O₇), le phosphate monomagnésique anhydre (Mg(H₂PO₄)₂), le phosphate dimagnésique trihydrate (MgHPO₄·3H₂O), le phosphate trimagnésique tétrahydrate (Mg₃(PO₄)₂·4H₂O), le métaphosphate de magnésium ([Mg(PO₃)₂]ₙ), le pyrophosphate de magnésium (Mg₂P₂O₇), l'orthophosphate ferrique (FePO₄), le pyrophosphate ferrique (Fe₄(P₂O₇)₃), le phosphate de trizinc dihydrate (Zn₃(PO₄)₂·2H₂O), le pyrophosphate de zinc (Zn₂P₂O₇), le pyrophosphate de cuivre II (Cu₂P₂O₇), le phosphate de sodium-aluminium, le sulfate de sodium-aluminium acide, le carbonate de calcium (CaCO₃), l'hydroxyde de magnésium (Mg(OH)₂), le citrate de tricalcium, le gluconate de calcium, le pyrophosphate de tétrasodium (Na₄P₂O₇) et leurs mélanges.
